# EUROPEAN PATENT APPLICATION

(11) **EP 3 719 690 A1**
(43) Date of publication of application: **07.10.2020**
(21) Application number: 19200421.6
(22) Date of filing: 30.09.2019
(51) Int. Cl.: G06K 7/00

(54) **DATA READING APPARATUS INTEGRATED WITH BARCODE READING APPARATUS IN MACHINE BODY**

(30) Priority: 04.04.2019 CN 201910268614; 04.04.2019 CN 201910268625
(71) Applicant: Fujian Newland Auto-ID Tech. Co., Ltd., Fujian 350001 (CN)
(72) Inventor: Chen, Haihan, Fujian 350001 (CN); Zhuang, Huaqiang, Fujian 350001 (CN); Liu, Jijun, Fujian 350001 (CN); Wang, Meng, Fujian 350001 (CN); Li, Guangping, Fujian 350001 (CN)
(74) Representative: Osterhoff, Utz

(57) **Abstract**

A data reading apparatus integrated with a barcode identification and reading module in a machine body includes a housing into which a card is insertable, and a circuit board disposed in a frame of the housing; by disposing an Integrated Circuit (IC) card socket and a Near Field Communication (NFC) module on the circuit board, the data included in the card can be identified and read; by cooperatively using a lens module disposed in the housing with a reflector obliquely disposed on a card inserting and pulling channel, in a small internal space of the housing, a distance of an imaging light path of the lens module is shortened, so that an image sensor can completely capture a longer-length one-dimensional barcode; by disposing a light source for lighting in the housing, the barcode on the card can be captured by the image sensor at an appropriate brightness in the internal environment with weak light conditions; so that the barcode identification and reading module is built in the data reading apparatus inserted with the card, and the original size does not need to be changed; and on the basis of original use of the card inserted, the barcode and NFC functions are added, and the use habit of a user to insert the card does not need to be changed.

## Description

### TECHNICAL FIELD

The present invention relates to a data collection apparatus, and in particular to a data reading apparatus integrated with a barcode reading apparatus in a machine body.

### BACKGROUND

As a common information carrier, a barcode has been transformed from traditional industrial, logistic and commodity industrial applications to civil applications. Applications such as barcode payment and barcode identity information are continuously booming. As an important supplementary information carrier for a traditional Integrated Circuit (IC) card, a Radio Frequency Identification Device (RFID) and a magnetic stripe card, the barcode is used more frequently. The barcode converts the character information into black and white stripes, which are identifiable by the machine, improving the universality of machine identification and reading. Moreover, compared with the direct character printing, the privacy performance is better.

Resident Identification cards (ID cards) in some countries and regions, municipal ID cards in some regions of our country, and employee cards in some institutions, cards on the magnetic stripe cards and/or IC cards have gradually fail to meet the requirements on information security and information quantity. As a result, a module for storing information and a module for verifying the information need to be added, and it would be an ideal solution to add barcode information and meet the identification and reading of a Near Field Communication (NFC) function. To identify the barcode information and archive the NFC function, it is necessary to upgrade or replace a data identification and reading machine of the existing IC card. A common practice is that a barcode reading apparatus is attached via its own data interface and a cable, an NFC module is added, and three independent terminals are used cooperatively. Such an upgrade way has a low cost at present. However, some card data reading apparatuses need to be embedded in some upper computer devices, such as a sales terminal, a deposit and withdrawal terminal and an identity information query and printing terminal and the like. Since the sizes of these terminals, and the mounting position and dimension of each module are fixed, it is difficult to attach a barcode reading apparatus and an NFC module via an external cable. Moreover, to realize the reading of different module information of a card, there is neccesary to insert the card, hold the card to contact the NFC module, and hold the card to align the barcode to a barcode reading apparatus, and align the barcode to a lens at a certain distance for reading. The use process of a user is cumbersome, and does not comply with the conventional card inserting use habit.

### SUMMARY

In order to solve the above problems in the prior art, the present invention provides a data reading apparatus integrated with a barcode reading apparatus and an NFC module in a machine body, where the barcode reading apparatus and the NFC module are integrated to a housing of the data reading apparatus without changing the size of the data reading apparatus of the original card.

The technical solutions of the present invention are as follows.

A data reading apparatus integrated with a barcode identification and reading module in a machine body, includes:
a housing, wherein a front panel is disposed on a front side of the housing, the front panel is disposed with a card inserting port, a frame is disposed along a card inserting direction, and the card inserting port and the frame form a card inserting and pulling channel;
a circuit board, disposed on the frame, disposed with a communication interface electrically connected to an upper device;
an IC card socket, wherein the IC card socket is connected onto the circuit board, and the IC card socket is in contact with an IC chip on a surface of one side of a card inserted for data communication; and
an NFC module, connected onto the circuit board, the NFC module and the card inserted configured to generate an induction voltage for the data communication;
the barcode identification and reading module further comprises:
   a lens module, wherein the lens module comprises at least one lens, the lens module is mounted with an image sensor at a rear portion of the lens, the lens module is electrically connected to the circuit board, and an angle between the lens module and the circuit board ranges from 70 degrees to 100 degrees;
   a light source, a light source circuit board comprising the light source disposed on the card inserting and pulling channel and disposed along the card inserting direction, one end of the light source fixed to the housing, configured to receive a lighting instruction from the circuit board and provide a light brightness for a surface of the card inserted; and
   a reflector, the reflector is obliquely disposed on the card inserting and pulling channel, to capture the light on the surface of the card inserted, which is irradiated by the light source by the lens module by refraction, so that the lens module obtains a barcode image printed on the surface of the card inserted;
   the lens module configured to output the collected barcode image to an image decoding circuit for decoding.

Further, the light source is a strip white Light-Emitting Diode (LED) light source, and is disposed along the card inserting direction.

Further, the reflector is a strip reflector, extending along the card inserting direction, and is disposed obliquely from a vertical direction by 10-75 degrees on the card inserting and pulling channel.

Further, a limit mechanism for propping against the card inserted is disposed on a tail portion of the IC card socket.

Further, upper and lower grooves for accommodating stretched fingers are disposed on the front panel.

Further, a metal shield is further sleeved on the frame to cover the barcode identification and reading module.

Further, a light diffusion sheet is further disposed under the light source to uniformly project a light emitted by the light source onto the surface of the card inserted.

The present invention has the following beneficial effects:
1. The data reading apparatus integrated with the barcode identification and reading module in the machine body according to the present invention, comprises a housing into which a card is insertable, and a circuit board disposed in a frame of the housing; by disposing an IC card socket and an NFC module on the circuit board, the data included in the card can be identified and read; by cooperatively using a lens module disposed in the housing with a reflector obliquely disposed on a card inserting and pulling channel, in a small internal space of the housing, a distance of an imaging light path of the lens module is shortened, so that an image sensor can completely capture a longer-length one-dimensional barcode; by disposing a light source for lighting in the housing, the barcode on the card can be captured by the image sensor at an appropriate brightness in the internal environment with weak light conditions; so that the barcode identification and reading module is built in the data reading apparatus inserted with the card, and the original size does not need to be changed; and based on the original use of the card inserted, the barcode and NFC functions are added, and information reading of different modules of the card can be realized without changing a use habit of a user to insert the card.
2. The data reading apparatus integrated with the barcode identification and reading module in the machine body according to the present invention, which has a better fit to an elongated one-dimensional barcode, by disposing a strip LED light source.
3. The data reading apparatus integrated with the barcode identification and reading module in the machine body according to the present invention, wherein the reflector is a strip reflector, extending along the card inserting direction, and is obliquely deflecting from a vertical direction by 10-75 degrees disposed on the card inserting and pulling channel, so that the longer barcode can be reflected to the lens, and a distance of the imaging light path of the lens module is shortened.
4. The data reading apparatus integrated with the barcode identification and reading module in the machine body according to the present invention, wherein a limit mechanism for propping against the card inserted is disposed on a tail portion of the IC card socket, so that the card can not be taken out is prevented, the limit mechanism does not need to be disposed in the frame independently to simplify the unnecessary structure.
5. The data reading apparatus integrated with the barcode identification and reading module in the machine body according to the present invention, wherein a metal shield is further sleeved on the frame to cover the barcode identification and reading module to prevent the stray light from interfering barcode imaging of the lens, and also to prevent the external device from colliding with the barcode identification and reading module.
6. The data reading apparatus integrated with the barcode identification and reading module in the machine body according to the present invention, further comprises a light diffusion sheet disposed under the light source to uniformly project light emitted by the light source to the surface of the card inserted.

### BRIEF DESCRIPTION OF DRAWINGS

FIG. 1 is a schematic diagram of a data reading apparatus integrated with a barcode identification and reading module in a machine body according to the present invention;
FIG. 2 is a schematic diagram of an IC card socket of a data reading apparatus integrated with a barcode identification and reading module in a machine body according to the present invention;
FIG. 3 is a schematic diagram showing a cooperation with an IC card socket when a card is inserted in a data reading apparatus integrated with a barcode identification and reading module in a machine body according to the present invention;
FIG. 4 is a schematic diagram showing that a card includes a barcode identification and reading module in a data reading apparatus integrated with a barcode identification and reading module in a machine body according to the present invention;
FIG. 5 is a schematic diagram showing that a data reading apparatus integrated with a barcode identification and reading module in a machine body according to the present invention includes the barcode identification and reading module;
FIG. 6 is a schematic diagram showing that a data reading apparatus integrated with a barcode identification and reading module in a machine body according to the present invention includes an NFC module;
FIG. 7 is a schematic diagram of an imaging light path of a barcode identification and reading module for identifying and reading a barcode in a data reading apparatus integrated with the barcode identification and reading module in a machine body according to the present invention; and
FIG. 8 is sectional view of a data reading apparatus integrated with a barcode identification and reading module in a machine body according to the present invention.

Numerals in the drawings: 1-housing; 11-front panel; 111-card inserting port; 12-frame; 13-card inserting and pulling channel; 2-circuit board; 21-communication interface; 3-IC card socket; 31-card; 311-barcode image; 32-IC chip; 4-NFC module; 5-barcode identification and reading module; 51-lens module; 52-light source; 53-reflector; 121-groove; 33-limit mechanism; 122-metal shield.

### DETAILED DESCRIPTION

The present invention will be described below in detail in combination with the accompanying drawings and specific embodiments.

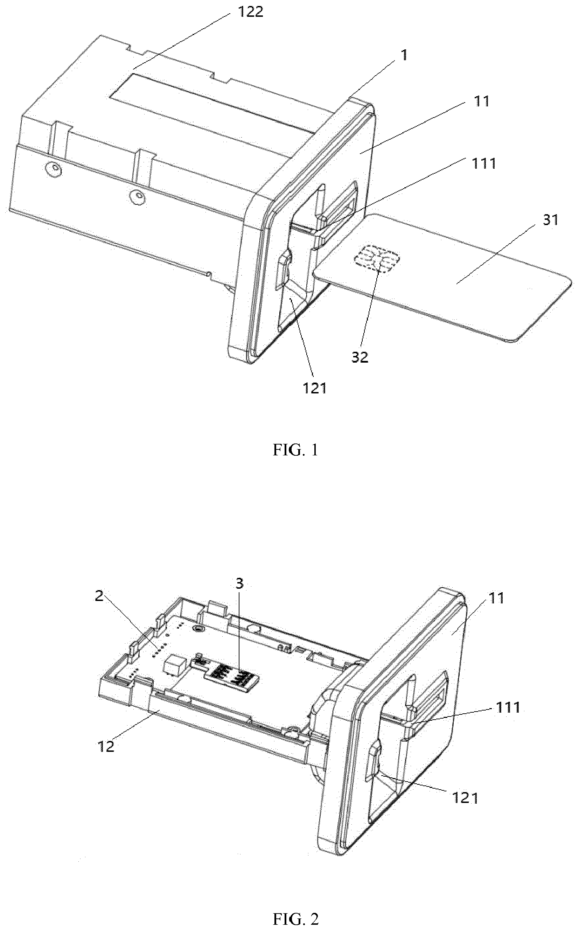

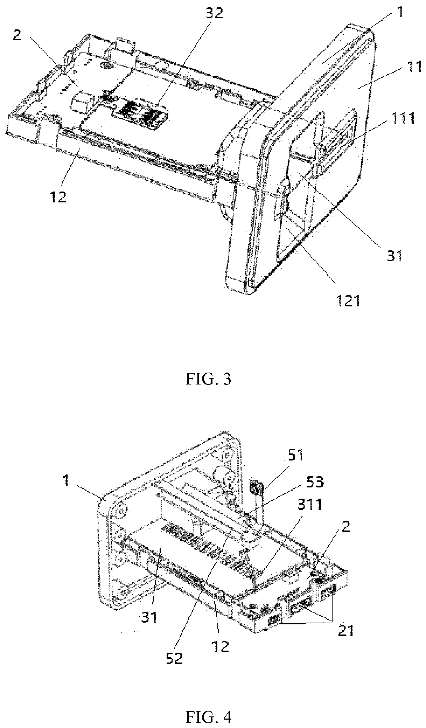

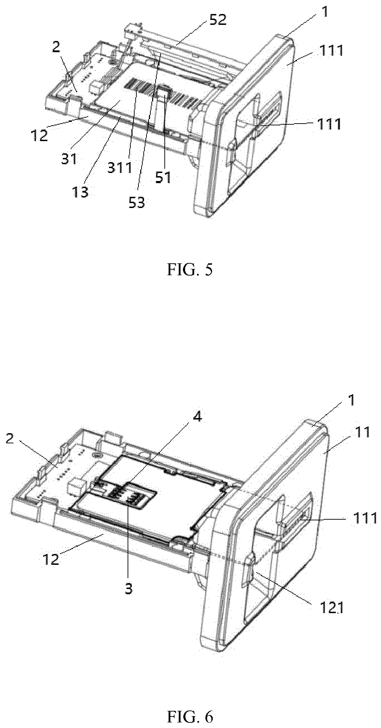

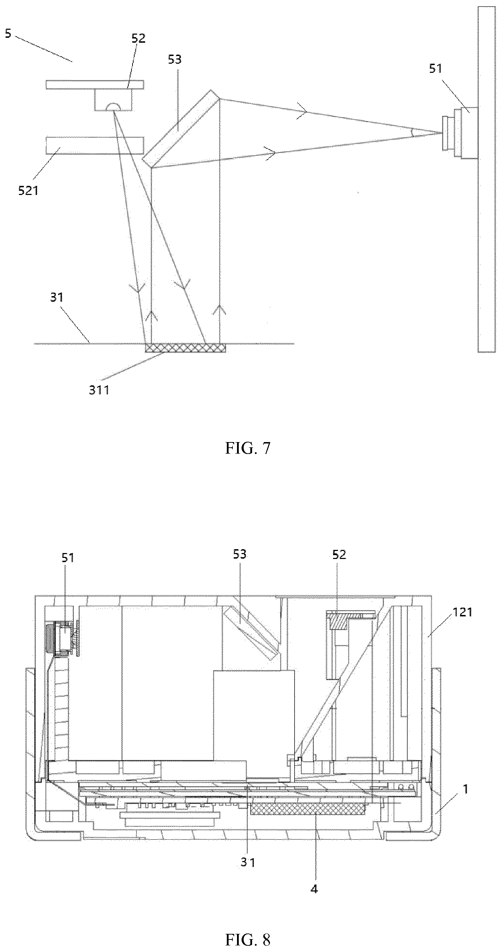

Referring to FIGS 1-8, a data reading apparatus integrated with a barcode identification and reading module in a machine body comprises:
A housing 1, a front panel 11 is disposed on a front side of the housing; a state indicator lamp is further disposed on the front panel. The material of the front panel can be a Polycarbonate (PC) and an Acrylonitrile Butadiene Styrene (ABS) and is black. A card inserting port 111 is on the front panel; a frame 12 is disposed along a card inserting direction; and the card inserting port 111 and the frame 12 form a card inserting and pulling channel 13 for accommodating the insertion of a card 31.

A circuit board 2, disposed on the frame 12, is disposed with a communication interface 21, and is electrically connected to an upper device. The upper device can be a terminal Personal Computer (PC), a vending machine and other payment-supported application devices. A plurality of small circuit boards, including an image decoding circuit, are integrated, or welded via welding spots, on the circuit board 2.

An IC card socket 3, the IC card socket 3 is connected onto the circuit board 2, and the IC card socket 3 is in contact with an IC chip 32 on a surface of one side of a card 31 inserted for data communication.

A near field communication module 4, that is, the NFC module, includes a complete CLF (non-connected front end module), a radio frequency antenna, and an SE (safe area), in which the CLF and the radio frequency antenna are necessary. The near field communication module is connected to the circuit board 2. The near field communication module 4 generates an induction voltage with a coil or chip or relevant module of the card inserted 31 for the data communication.

The barcode identification and reading module 5, further comprises:
a lens module 51, the lens module comprises at least one lens, the lens module is mounted with an image sensor at the rear portion of the lens, the image sensor can be a Complementary Metal Oxide Semiconductor (CMOS), where the CMOS is advantageous to identify and read a two-dimensional barcode such as QR code and Aztec code, and other common square two-dimensional barcodes in the prior art, and can also be a strip Charge Coupled Device (CCD), where the strip CCD is advantageous for a longer length barcode such as European Article Number (EAN) code and Universal Product Code (UPC) in one-dimensional barcodes. The lens module 51 is electrically connected to the circuit board 2, the circuit board notifies the lens module 51 of photographing an image and providing the photographed image to an image decoding circuit. An angle between the lens module 51 and the circuit board 2 ranges from 70 degrees to 100 degrees. Ideally, the angle is 90 degrees. The lens module can be electrically connected to the circuit board via a flexible circuit board. The flexible circuit board can be placed onto a support plate extending upward on the frame. The lens module 51 is mounted on the support plate by means of gluing or fixing the connector. The lens module 51 can also be directly fixed with the frame by using a hard circuit board.

A light source 52, a light source circuit board including the light source is disposed on the card inserting and pulling channel and is disposed along the card inserting direction, and one end of the light source is fixed with the housing, configured to receive a lighting instruction from the circuit board and provide a lighting brightness for a surface of the card inserted.

A reflector 53, the reflector 53 is obliquely disposed on the card inserting and pulling channel 13, to capture the light on the surface of the card 31 inserted, which is irradiated by the light source 52 by the lens module 51 by refraction, so that the lens module 51 obtains a barcode image 311 printed on the surface of the card 31 inserted.

The lens module 51 outputs the collected barcode image to the image decoding circuit for decoding.

The data reading apparatus integrated with the barcode identification and reading module in the machine body provided, comprises a housing 1 into which a card is insertable, and a circuit board 2 disposed in a frame 12 of the housing 1; by disposing an IC card socket 3 and an near field communication module 4 on the circuit board 2 to realize identify and read the data included in the card; by cooperatively using a lens module 51 disposed in the housing 1 with a reflector 53 obliquely disposed on a card inserting and pulling channel, a distance of an imaging light path of the lens module 51 is shortened in a small internal space of the housing, so that an image sensor can completely capture a longer-length one-dimensional barcode; by disposing a light source 52 for lighting in the housing 1, a barcode image 311 on the card can be captured by the image sensor at an appropriate brightness in the internal environment with weak light conditions; so that the barcode identification and reading module 5 is built in the data reading apparatus inserted with the card, and the original size does not need to be changed; and on the basis of original use of the card inserted, the barcode and NFC functions are added, and the information reading of different modules of the card can be realized without changing a use habit of a user to insert the card.

Further, the light source 52 is a strip white LED light source, can be LED particles uniformly arranged on the circuit board, can also be an LED lamp tube, which is disposed along the card inserting direction. By disposing the strip LED light source, an elongated one-dimensional barcode is better adapted.

Further, the reflector 53 is a strip reflector, extends along the card inserting direction, and is obliquely deflecting from a vertical direction by 10-75 degrees disposed on the card inserting and pulling channel. As a result, a longer barcode can be reflected to the lens, and a distance of an imaging light path of the lens module is shortened.

Further, a limit mechanism 33 for propping against the card 31 inserted is disposed on a tail portion of the IC card socket 32, so that the card 31 is prevented from falling into the housing 1, the limit mechanism does not need to be disposed in the frame 12 independently to simplify the unnecessary structure.

Further, upper and lower grooves 121 for accommodating stretched fingers are disposed on the front panel 11, thus providing a convenience for two fingers to clamp the card 31 and make it inserted for use and pulled out.

Further, a metal shield 122 is further sleeved on the frame 12 to cover the barcode identification and reading module 5, thus taking protecting and external signal interference shielding effects.

Further, a light diffusion sheet 521 is further disposed under the light source 52 to uniformly project a light emitted by the light source 52 onto the surface of the card inserted, thus preventing non-uniform brightness on the surface of the card.

The light diffusion sheet/plate, through the chemical or physical means, makes use of that light rays have physical phenomena of refraction, reflection and scattering when encountering two media having different refractive indexes (densities) in a traveling path, by adding an inorganic or organic light diffusing agent to the substrate material such as Polymethyl Methacrylate (PMMA), PC, Polystyrene (PS) and Polypropylene (PP), or by arranging arrays of micro-feature structures on a surface of the substrate material to artificially modulate the light, so that the light rays are refracted, reflected and scattered in different directions, changing the traveling path of light, and the effect of optically diffusing is achieved by achieving sufficient color dispersion of the incident light. There are three types of light diffusion plates.

The electrical connection used herein includes a wire connection between components or modules to transmit charges, and also includes indirect-connected signal transmission connection after module/circuit conversion, and uses signal transmission as a connection reference.

The above are merely the embodiments of the present invention and are not accordingly intended to limit a scope of the present invention. Any variation in an equivalent structure or equivalent procedure made by using the contents in the specification and accompanying drawings of the present invention, or direct or indirect applications in other related technical fields all are included in a protection scope of the present invention.

## Claims

1. A data reading apparatus integrated with a barcode identification and reading module in a machine body, comprising:
a housing, wherein a front panel being is disposed on a front side of the housing, the front panel is disposed with a card inserting port, a frame is disposed along a card inserting direction, and the card inserting port and the frame form a card inserting and pulling channel;
a circuit board, disposed on the frame, disposed with a communication interface electrically connected to an upper device;
an IC card socket, wherein the IC card socket is connected onto the circuit board, and the IC card socket is in contact with an IC chip on a surface of one side of a card inserted for data communication according to a setting selection; and
a near field communication module, connected onto the circuit board, the near field communication module and the card inserted configured to generate an induction voltage for the data communication according to a setting selection,
the barcode identification and reading module further comprising:
a lens module, wherein the lens module comprises at least one lens, the lens module is mounted with an image sensor at a rear portion of the lens, the lens module is electrically connected to the circuit board, and an angle between the lens module and the circuit board ranges from 70 degrees to 100 degrees;
a light source, wherein a light source circuit board comprising the light source is disposed on the card inserting and pulling channel and disposed along the card inserting direction, one end of the light source fixed to the housing, configured to receive a lighting instruction from the circuit board and provide a lighting brightness for a surface of the card inserted; and
a reflector, wherein the reflector is obliquely disposed on the card inserting and pulling channel, to capture the light on the surface of the card inserted, irradiated by the light source by the lens module by refraction, so that the lens module obtains a barcode image printed on the surface of the card inserted; and
the lens module configured to output, according to a setting selection, the collected barcode image to an image decoding circuit for decoding.

2. The data reading apparatus integrated with the barcode identification and reading module in the machine body according to claim 1, wherein the light source is a strip white LED light source, and is disposed along the card inserting direction.

3. The data reading apparatus integrated with the barcode identification and reading module in the machine body according to claim 2, wherein the reflector is a strip reflector, extending along the card inserting direction, and is disposed obliquely from a vertical direction by 10-75 degrees on the card inserting and pulling channel.

4. The data reading apparatus integrated with the barcode identification and reading module in the machine body according to claim 3, wherein a limit mechanism for propping against the card inserted is disposed on a tail portion of the IC card socket.

5. The data reading apparatus integrated with the barcode identification and reading module in the machine body according to claim 4, wherein upper and lower grooves for accommodating stretched fingers are disposed on the front panel.

6. The data reading apparatus integrated with the barcode identification and reading module in the machine body according to claim 5, wherein a metal shield is further sleeved on the frame to cover the barcode identification and reading module.

7. The data reading apparatus integrated with the barcode identification and reading module in the machine body according to claim 6, wherein a light diffusion sheet is further disposed under the light source to uniformly project a light emitted by the light source to the surface of the card inserted.
